# EUROPEAN PATENT APPLICATION

(11) **EP 2 611 020 A2**
(43) Date of publication of application: **03.07.2013**
(21) Application number: 12198727.5
(22) Date of filing: 20.12.2012
(51) Int. Cl.: H02M 7/155

(54) **Auxiliary power generation circuit**

(30) Priority: 28.12.2011 TW 100149357
(71) Applicant: Ushijima, Masakazu, Tokyo 165-0027 (JP)
(72) Inventor: Ushijima, Masakazu, Tokyo 165-0027 (JP)
(74) Representative: 2K Patentanwälte Blasberg Kewitz & Reichel

(57) **Abstract**

An auxiliary power generation circuit adopted for use on a filter power circuit includes a first voltage stabilization capacitor and a second voltage stabilization capacitor connecting to the first voltage stabilization capacitor via a first diode. The first and second voltage stabilization capacitors form a capacitor voltage division circuit. The first voltage stabilization capacitor and first diode are bridged by a first connection point which is connected to a short circuit element and a second diode with a set on current opposite to the short circuit element. The short circuit element has a control end connecting to a first Zener diode which is connected to a first resistor with a desired resistance. The first resistor is connected to a second connection point between the second voltage stabilization capacitor and first diode.

## Description

### FIELD OF THE INVENTION

The present invention relates to an auxiliary power generation circuit and particularly to a power factor correction circuit of auxiliary DC power used on high voltage switches or integrated circuits to control LED illumination or motors.

### BACKGROUND OF THE INVENTION

The general integrated circuits in operation while energized by electric power, often are incorporated with at least one lower voltage auxiliary DC power in addition to the main duty power. Although the auxiliary DC power can be obtained from the energized electric power mentioned above, the integrated circuits generally also contain an auxiliary power circuit to generate auxiliary DC power.

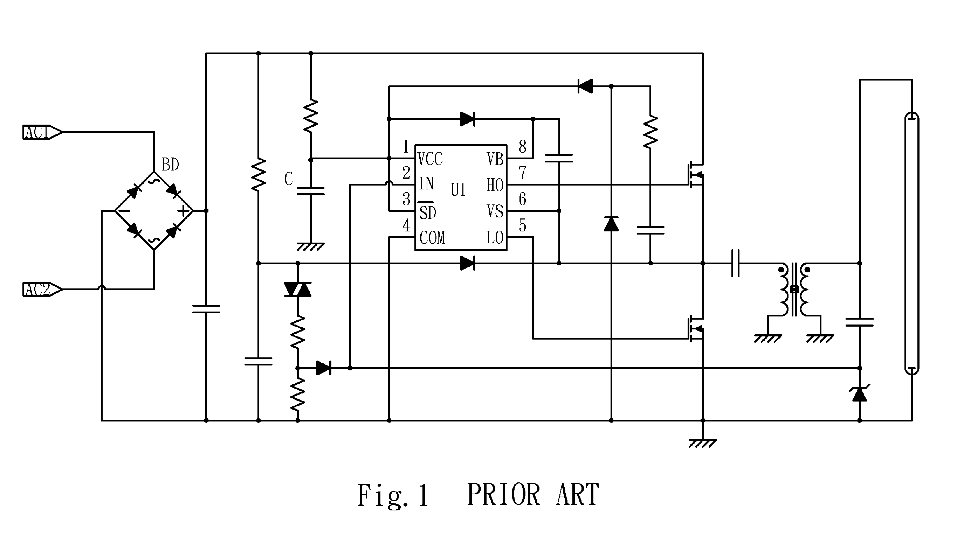

The aforesaid auxiliary DC power can be generated in many ways depending on different application circuits. For instance, the auxiliary DC power for an integrated circuit to control operation of a power factor correction circuit includes an auxiliary coil wound in a choke coil. The choke coil is coupled with an AC power source during rectification to get the auxiliary power circuit, as shown in FIG. 1. Aside from the conventional technique mentioned above, there is also another approach by coupling a capacitor C with a bridge rectification circuit BD. Rectified power charges the capacitor C to form the auxiliary DC power. Moreover, the conventional integrated circuit controlled by the auxiliary DC power in operation usually requires only a small current about a few mA. However, the general auxiliary power circuit usually generates the auxiliary DC power at a much greater current. This causes unnecessary loss and overheat of the integrated circuit and other related elements. Furthermore, in the event that a great variation takes place at the power input end (AC input end) the stability of the auxiliary DC power could be impaired by adopting the approaches set forth. Even if a dedicated integrated circuit is provided to generate the auxiliary DC power, it still cannot generate the auxiliary DC power at a smaller current and could exceed safety specifications.

### SUMMARY OF THE INVENTION

The primary object of the present invention is to provide a simpler circuit to generate auxiliary DC power at a smaller current.

This problem is solved by an auxiliary power generation circuit according to claim 1. Further advantageous embodiments are the subject-matter of the dependent claims.

To achieve the foregoing object the invention provides an auxiliary power generation circuit adopted for use on a filter power circuit which has a main duty power output end and a ground end. The auxiliary power generation circuit includes a first voltage stabilization capacitor connecting to the main duty power output end and a first diode at another end thereof opposing the main duty power output end, and a second voltage stabilization capacitor via the first diode. The second voltage stabilization capacitor has another end opposing the first diode and connecting to the ground end. The first and second voltage stabilization capacitors form a capacitor voltage division circuit. The first voltage stabilization capacitor and first diode also are bridged by a first connection point which is connected to a short circuit element contained a control end set on to form a short circuit with the ground end and a second diode with a set on current opposite to the short circuit element. The short circuit element is connected to a first Zener diode via the control end. The first Zener diode has another end opposing the short circuit element and connecting to a first resistor with a desired resistance. The first resistor has another end opposing the first Zener diode and connecting to a second connection point between the second voltage stabilization capacitor and first diode.

In one embodiment the filter power circuit further includes a valley fill power factor correction circuit and the first voltage stabilization capacitor is one of the elements of the valley fill power factor correction circuit. The valley fill power factor correction circuit also has a third diode connecting to the main duty power output end.

In another embodiment the filter power circuit is connected to a bridge rectification circuit, and the auxiliary power generation circuit includes a dithering circuit connecting to the bridge rectification circuit. Furthermore, the dithering circuit includes a fourth diode bridging the first voltage stabilization capacitor and main duty power output end, a fifth diode connecting to the fourth diode and bridge rectification circuit, and an impedance circuit connecting to a third connection end between the fourth diode and fifth diode. More specifically, the impedance circuit can consist of an inductor and a capacitor coupled in series.

The circuit of the invention thus formed, compared with the conventional techniques, provides features as follow:
1. Generates auxiliary DC power at a smaller current.
2. Provides steady output without being affected by variations of external AC power sources.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a schematic circuit diagram of a conventional auxiliary power generation circuit.
FIG. 2 is a schematic circuit diagram of a first embodiment of the auxiliary power generation circuit of the invention.
FIG. 3 is a schematic view of the ripple voltage waveform according to the embodiment of the invention.
FIG. 4 is a schematic circuit diagram of a second embodiment of the invention.
FIG. 5 is a schematic circuit diagram of a third embodiment of the invention.
FIG. 6 is a schematic circuit diagram of a fourth embodiment of the invention.
FIG. 7 is a schematic circuit diagram of a fifth embodiment of the invention.
FIG. 8 is another schematic circuit diagram of the fifth embodiment of the invention.
FIG. 9 is a schematic circuit diagram of a sixth embodiment of the invention.
FIG. 10 is a schematic circuit diagram of a seventh embodiment of the invention.
FIG. 11 is another schematic circuit diagram of the seventh embodiment of the invention.

### DETAILED DESCRIPTION OF THE PREFERRED EMBODIMENTS

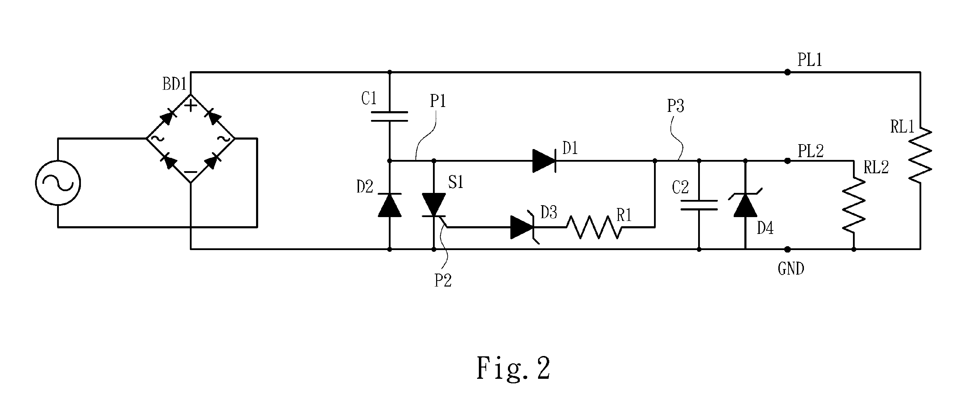

Please referring to FIG. 2, the present invention aims to provide an auxiliary power generation circuit adopted for use on a filter power circuit connected to a bridge rectification circuit BD 1 which receives an external AC power to perform power conversion and includes a main duty power output end PL1 to output a main duty power and a ground end GND. The auxiliary power generation circuit includes a first voltage stabilization capacitor C1 which is connected to the main duty power output end PL1 and has another end opposing the main duty output end PL 1 to connect to a first diode D1, and also is connected to a second voltage stabilization capacitor C2 via the first diode D1. The second voltage stabilization capacitor C2 has another end opposing the first diode D1 and connecting to the ground end GND. The first and second voltage stabilization capacitors C1 and C2 form a capacitor voltage division circuit. The first voltage stabilization capacitor C1 and first diode D1 are bridged by a first connection point P1 which is connected to a short circuit element S1 and a second diode D2 with a set on current opposite to the short circuit element S1. The short circuit element S1 has a control end P2 set on to form a short circuit between the short circuit element S1 and ground end GND. The short circuit element S1 can be selected from the group consisting of a Silicon-controller Rectifier (SCR), a thyristor, a Programmable Unijunction Transistor (PUT), a Unijunction Transistor (UJT) and combinations thereof. The short circuit element S1 also is connected to a first Zener diode D3 via the control end P2. The first Zener diode D3 has another end opposing the short circuit element S1 and connecting to a first resistor R1 with a desired resistance. The first resistor R1 has another end opposing the first Zener diode D3 and connecting to a second connection point P3 between the second voltage stabilization capacitor C2 and first diode D1.

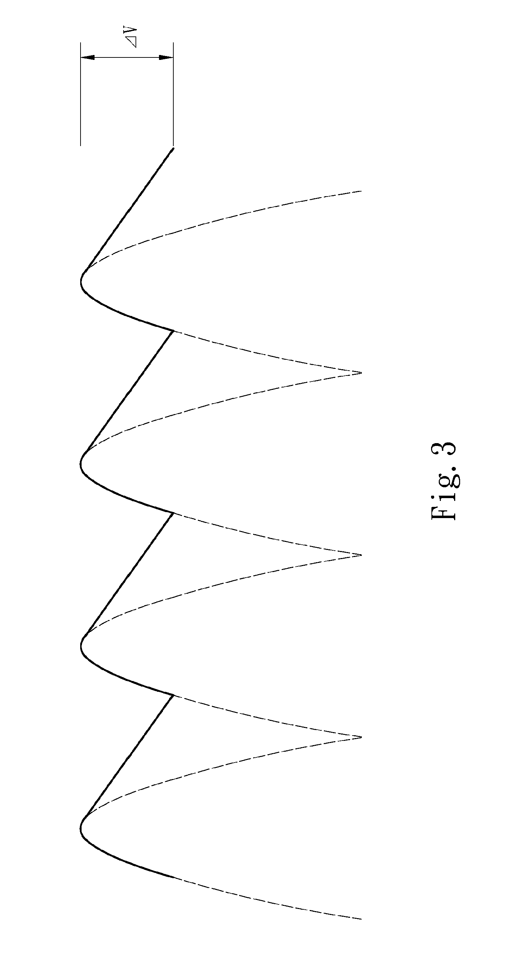

Please referring to FIG. 3, after the filter power circuit has finished power conversion, the converted power still has a certain amount of ripple voltage. The auxiliary power generation circuit of the invention uses the ripple voltage to generate the auxiliary power. The bridge rectification circuit BD1 rectifies the current for output. When the output waveform of the bridge rectification circuit BD1 has reached the crest, the first voltage stabilization capacitor C1 is charged, and the second voltage stabilization capacitor C2 also is charged through the first diode D1, and the charged power of the second voltage stabilization capacitor C2 becomes an auxiliary DC power which is output through an auxiliary duty power output end PL2. The voltage of the second voltage stabilization capacitor C2 gradually increases, and when it exceeds the duty voltage of the first Zener diode D3, the first Zener diode D3 gets a drive current from the second voltage stabilization capacitor C2 to set on the short circuit S1, then charging of the second voltage stabilization capacitor C2 is suspended; i.e., the charged power of the second voltage stabilization capacitor C2 is limited by the duty voltage of the first Zener diode D3 to form a stabilized voltage. In addition, during discharge of the first voltage stabilization capacitor C1 a current passes through the second diode D2. To avoid the voltage of the second voltage stabilization capacitor C2 from increasing continuously while the short circuit S1 is set on, a second Zener diode D4 can be provided between the second voltage stabilization capacitor C2 and auxiliary duty power output end PL2, thereby further limit the voltage of the auxiliary DC power. Preferably, the second Zener diode D4 has a duty voltage higher than that of the first Zener diode D3.

While the embodiment previously discussed is implemented via the ripple voltage, in practice the ripple voltage is divided through the first filter capacitor C1 and second filter capacitor C2. Hence in the circuit layout the ripple voltage can be known by current consumption of a main work load RL1 connecting to the main duty power output end PL1. On the other hand, when the first filter capacitor C1 gets the ripple voltage, the second filter capacitor C2 also gets another ripple voltage through the first diode D1, i.e., the filter voltage is a voltage component of the first and second voltage stabilization capacitors C1 and C2. Thus, increasing the capacitance of the second voltage stabilization capacitor C2 can generate the auxiliary DC power at a lower voltage. By contrast, decreasing the capacitance of the second voltage stabilization capacitor C2 can generate the auxiliary DC power at a higher voltage. As a result, although the second voltage stabilization capacitor C2 also is affected by the ripple voltage of the filter power circuit to generate ripples, through the invention a steady auxiliary DC power can be generated for operation use even if a greater variation happens to the external AC power. The auxiliary DC power is equivalent to the potential at two ends of a secondary work load RL2.

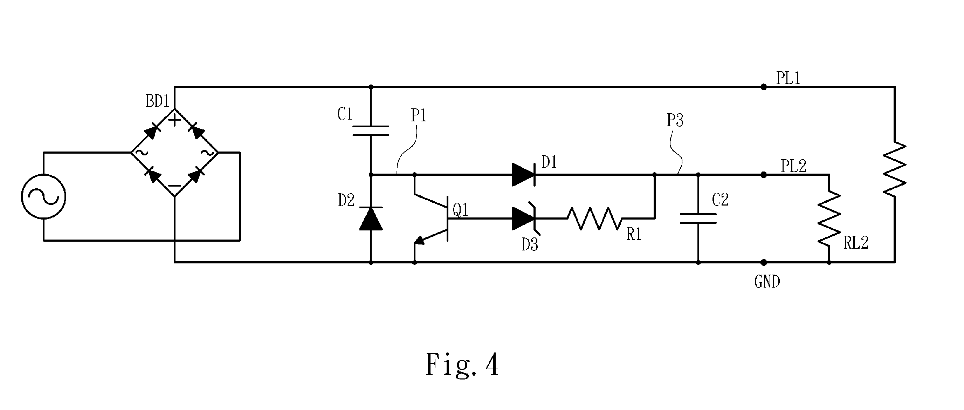

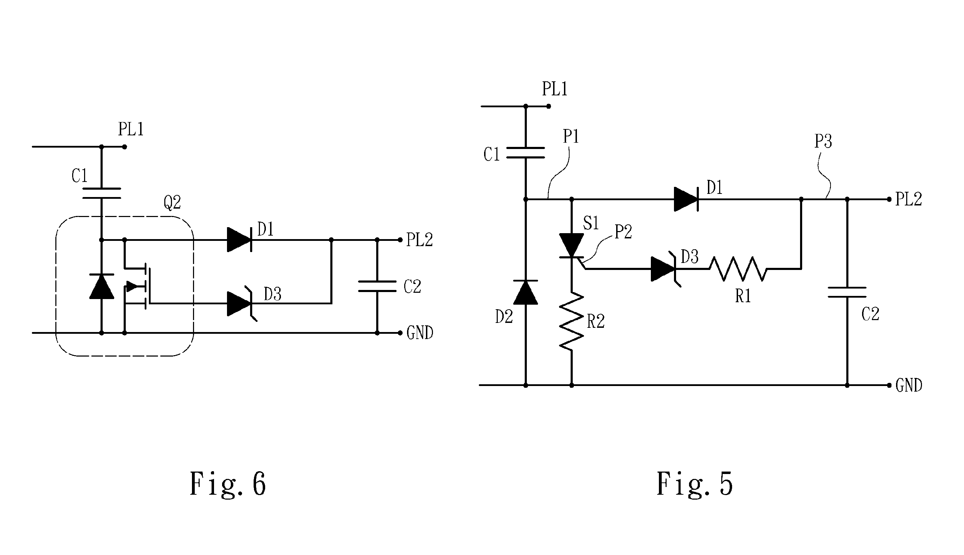

The short circuit element S1 can be implemented in various fashions. FIG. 4 illustrates one of the embodiments in which the short circuit element S1 is a transistor Q1 which can avoid the problems of noise generation and parasite oscillation during activation process of the short circuit element S1. Please also referring to FIG. 5, the second diode D2 and ground end GND can also be bridged by a second resistor R2 to alleviate voltage fluctuation during the activation process of the short circuit element S1. While the embodiment mentioned above adopts the resistor, it merely serves as an example and is not the limitation of the invention. For instance, by coupling with a coil in series can also generate the same effect. Please referring to FIG. 6, in addition to the embodiments previously discussed, the short circuit element S1 can also be a Field effect transistor (FET) Q2 with an inverse diode to replace the second diode D2, then the voltage fluctuation during the activation process can be alleviated even without coupling with an extra resistor in series.

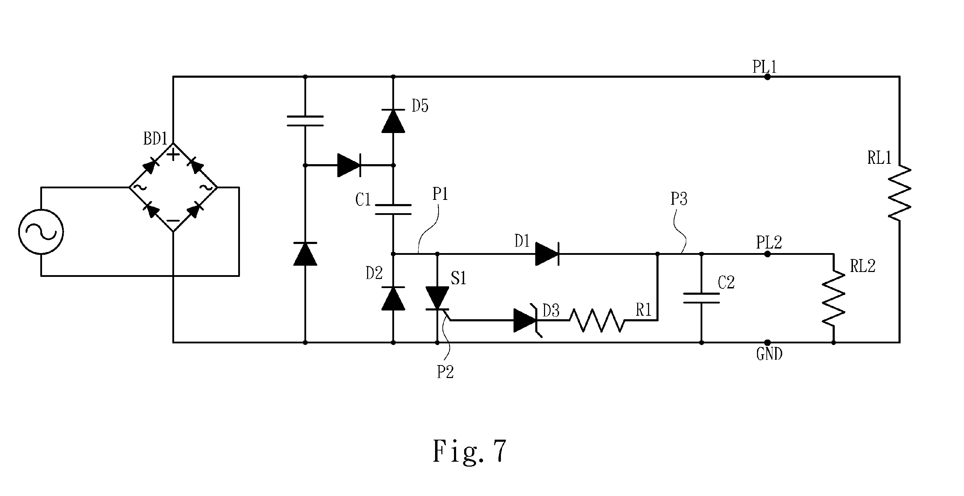

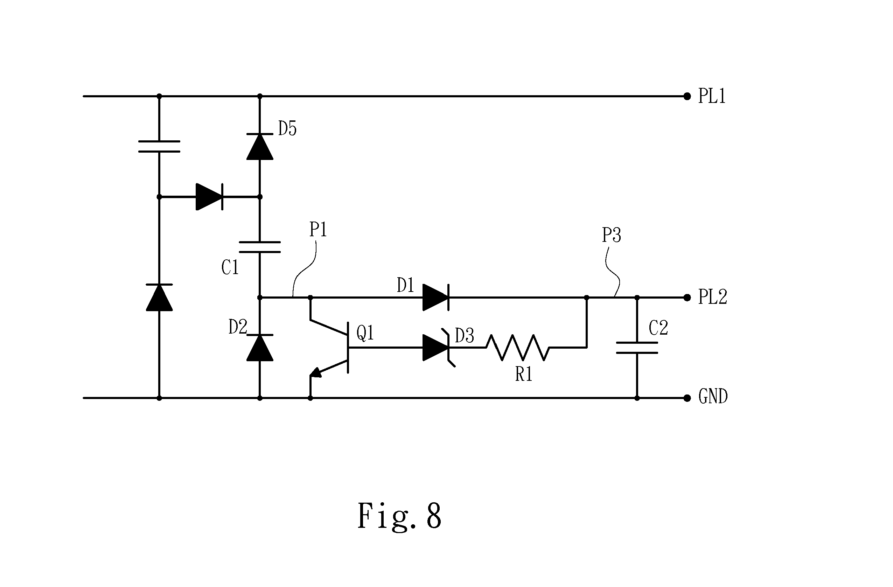

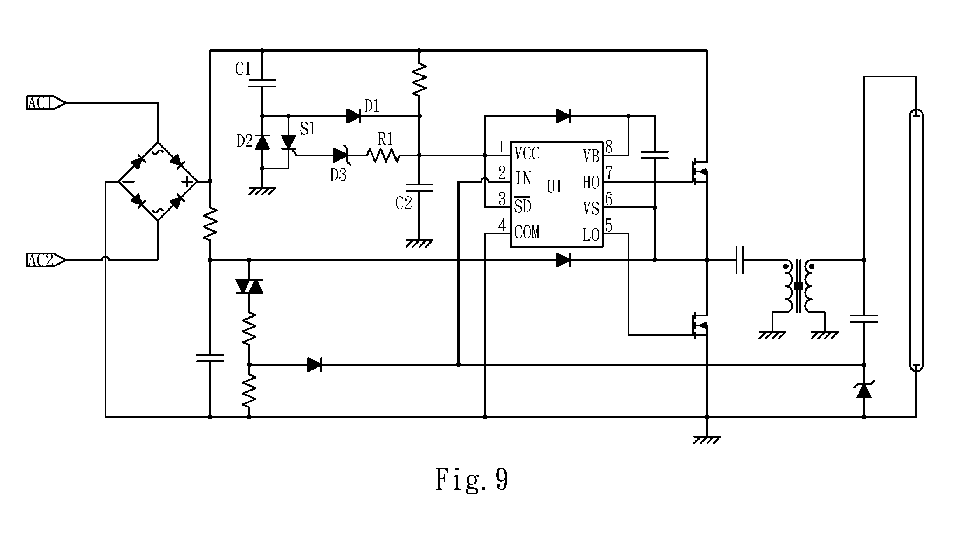

FIGS. 7 and 8 depict another embodiment in which the filter power circuit includes a Valley Fill power factor correction circuit. The first voltage stabilization capacitor C1 is one of the elements in the Valley Fill power factor correction circuit, and connected to a third diode D5 and main duty power output end PL1 thereof. By incorporating with the Valley Fill power factor correction circuit the practicality of the auxiliary power generation circuit improves. In addition, other implementation references related to the Valley Fill power factor correction circuit also can be obtained from Japan patent gazette No. 1982-130542. Please refer to FIGS. 1 and 9 for other conventional structures adopted the prior techniques previously discussed. While the conventional techniques adopt circuitries operable in the AC voltage range between 90V and 110V to get a stable auxiliary power generation circuit, the circuit provided by the invention can generate steady auxiliary DC power in the AC voltage range between 25V and 120V.

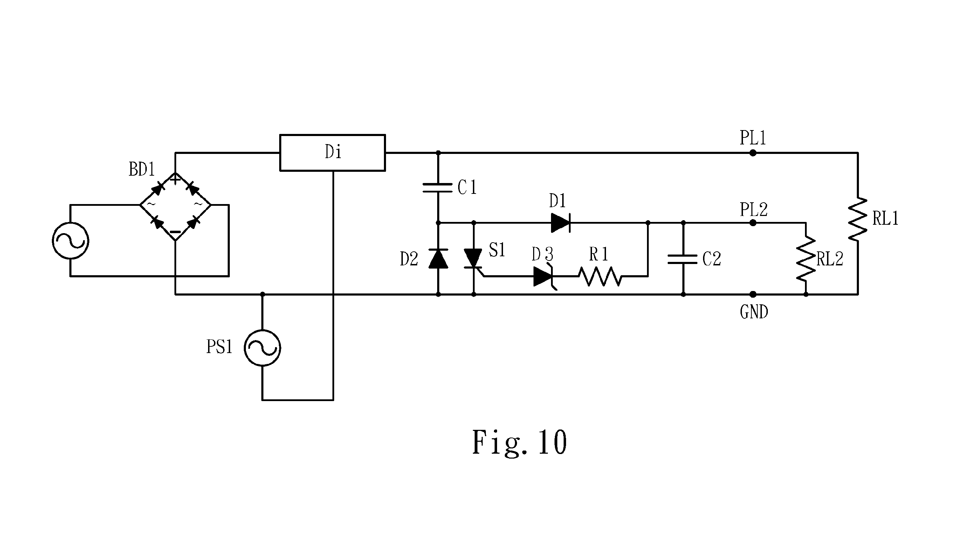

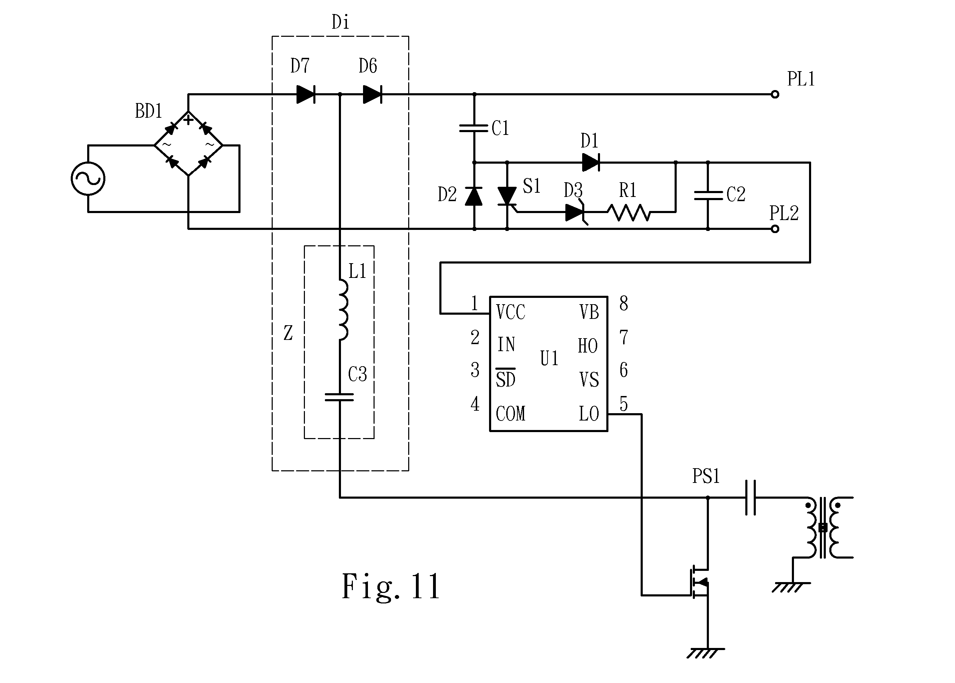

Please referring to FIG. 10, the auxiliary power generation circuit of the invention can further include a Dithering circuit Di to correct power factor. The dithering circuit Di mainly aims to steady supply of output power from the bridge rectification circuit BD1. The dithering circuit Di can be implemented in various fashions. In this embodiment the dithering circuit Di includes a fourth diode D6, a fifth diode D7 and an impedance circuit Z. The fourth diode D6 is connected to the first voltage stabilization capacitor C1 and main duty power output end PL1. The fifth diode D7 is connected to the fourth diode D6 and bridge rectification circuit BD1. The fourth diode D6 and fifth diode D7 are bridged by a third connection end P4. The impedance circuit Z is connected to the third connection end P4 interposed between the fourth diode D6 and fifth diode D7. Also referring to FIG. 11, the impedance circuit Z is connected to an AC power source PS1 to channel AC current between the fourth diode D5 and fifth diode D6. The AC current can further be a drain current of a metal-oxide-semiconductor field-effect transistor, to drive an inverter circuit. In this embodiment the impedance circuit Z consists of an inductor L1 and a first capacitor C3 that are coupled in series, but this is not the limitation. It also can be implemented via a booster transformer. Furthermore, one diode can also be omitted. Through the dithering circuit current passed through the bridge rectification circuit BD1 can be maintained continuously to avoid abnormal shutdown of a Tri-electrode AC switch when it is used on a Tri-electrode AC switch dimmer. The Tri-electrode AC switch also can get a smoother dimming effect. Moreover, even if the voltage at the Tri-electrode AC switch is lower the auxiliary power generation circuit of the invention can still generate auxiliary DC power.

As a conclusion, the invention is used on a filter power circuit and includes a first voltage stabilization capacitor and a second voltage stabilization capacitor connected to the first voltage stabilization capacitor via a first diode. The first and second voltage stabilization capacitors form a capacitance voltage division circuit. The first voltage stabilization capacitor and first diode are bridged by a first connection point connecting to a short circuit element and a second diode with a set on current opposite to the short circuit element. The short circuit element has a control end connecting to a first Zener diode which is connected to a first resistor with a desired resistance. The first resistor is connected to a second connection point between the second voltage stabilization capacitor and first diode. Through the aforesaid structure a steady auxiliary DC power with a smaller current can be generated and output.

While the preferred embodiments of the invention have been set forth for the purpose of disclosure, they are not the limitation of the invention, modifications of the disclosed embodiments of the invention as well as other embodiments thereof may occur to those skilled in the art. Accordingly, the appended claims are intended to cover all embodiments which do not depart from the spirit and scope of the invention.

## Claims

1. An auxiliary power generation circuit used on a filter power circuit consisting of a main duty power output end and a ground end,
the main duty power output end connecting to a first voltage stabilization capacitor,
a first diode connecting to another end of the first voltage stabilization capacitor opposing the main duty power output end and a second voltage stabilization capacitor connecting to the first voltage stabilization capacitor through the first diode,
the second voltage stabilization capacitor having another end opposing the first diode and connecting to the ground end,
the first and second voltage stabilization capacitors forming a capacitor voltage division circuit,
the first and second voltage stabilization capacitors being interposed by a first connection point connected to a short circuit element which contains a control end set on to form a short circuit with the ground end and a second diode set on by a current opposite to the short circuit element,
the short circuit element being connected to a first Zener diode via the control end,
the first Zener diode containing another end opposing the short circuit element and connecting to a first resistor with a selected resistance,
the first resistor containing another end opposing the first Zener diode to connect to a second connection point between the second voltage stabilization capacitor and the first diode.

2. The auxiliary power generation circuit of claim 1, wherein the filter power circuit further includes a Valley fill power factor correction circuit and the first voltage stabilization capacitor is one of the elements of the Valley fill power factor correction circuit which contains a third diode connecting to the main duty power output end.

3. The auxiliary power generation circuit of claim 1 or 2, wherein the filter power circuit is connected to a bridge rectification circuit, the auxiliary power generation circuit including a dithering circuit connecting to the bridge rectification circuit.

4. The auxiliary power generation circuit of claim 3, wherein the dithering circuit includes a fourth diode bridging the first voltage stabilization capacitor and the main duty power output end, a fifth diode connecting to the fourth diode and the bridge rectification circuit and an impedance circuit connecting to a third connection end located between the fourth diode and the fifth diode.

5. The auxiliary power generation circuit of claim 4, wherein the impedance circuit comprises an inductor and a capacitor that are coupled in series.

6. The auxiliary power generation circuit of claim 2, wherein the filter power circuit includes a dithering circuit connected to the bridge rectification circuit.

7. The auxiliary power generation circuit of claim 6, wherein the dithering circuit includes a fourth diode bridging the first voltage stabilization capacitor and the main duty power output end, a fifth diode connecting to the fourth diode and the bridge rectification circuit and an impedance circuit connecting to a third connection end located between the fourth diode and the fifth diode.

8. The auxiliary power generation circuit of claim 7, wherein the impedance circuit comprises an inductor and a capacitor that are coupled in series.
